Europäisches Patentamt

European Patent Office

Office européen des brevets

(11) Veröffentlichungsnummer: **0 321 666**
A1

## EUROPÄISCHE PATENTANMELDUNG

(21) Anmeldenummer: 88116865.2

(51) Int. Cl.⁴ **A23N 1/02**

(22) Anmeldetag: 11.10.88

(30) Priorität: 16.10.87 DE 3735142

(43) Veröffentlichungstag der Anmeldung:
28.06.89 Patentblatt 89/26

(84) Benannte Vertragsstaaten:
AT CH DE ES FR IT LI

(71) Anmelder: FLOTTWEG GMBH
Industriestrasse 8
D-8313 Vilsbiburg(DE)

(72) Erfinder: Colesan, Fritz, Dipl.-Ing.(Univ)
Klötzlmüllerstrasse 9
D-8300 Landshut(DE)

(74) Vertreter: Flügel, Otto, Dipl.-Ing. et al
Lesser, Flügel & Säger Patentanwälte
Richard-Strauss-Strasse 56 Postfach 81 05 40
D-8000 München 80(DE)

(54) Verfahren und Vorrichtung zur Saftgewinnung aus Weintrauben.

(57) Verfahren zur Saftgewinnung aus Weintrauben, bei welchem die Trauben mittels einer Mühle oder dergleichen zerkleinert werden und die so gewonnene Maische anschließend in Saft und Trester getrennt wird, welches zum Zwecke der Verbesserung und insbesondere Beschleunigung der Saftgewinnung aus Weintrauben derart ausgestaltet ist, daß die Trauben mittels eines Schneidvorganges zerkleinert werden und daß die Maische in einem sich zeitlich eng anschließenden, kontinuierlich ablaufenden Trennvorgang einer Dauer nur weniger Minuten behandelt wird.

EP 0 321 666 A1

# VERFAHREN UND VORRICHTUNG ZUR SAFTGEWINNUNG AUS WEINTRAUBEN

Die Erfindung bezieht sich auf eine Verfahren zur Saftgewinnung aus Weintrauben mit den Merkmalen des Oberbegriffes des Anspruches 1 sowie auf eine Vorrichtung zur Durchführung des Verfahrens.

Bisher wurden im Zuge der Saftgewinnung aus Weintrauben diese üblicherweise zunächst mit einer Flügelwalzenmühle zerkleinert, besser gesagt, gequetscht. Bei dieser Mahlart wird vermieden, daß Stiele. Kerne und Schalen der Trauben zu stark zerkleinert werden, um zu verhindern, daß bei der anschließenden Entsaftung der Maische zu viele wertmindernde Inhaltsstoffe, vor allem Gerbstoffe, dieser bei der Zerkleinerung anfallenden Fruchtbestandteile in den Saft gelangen. Die Maische wird mit Hilfe von Packpressen. Korbpressen oder dergleichen in Saft und Trester getrennt, wozu jeweils eine Preßbehandlungsdauer in der Größenordnung von Stunden erforderlich ist.

Der Erfindung liegt die Aufgabe zugrunde, die Saftgewinnung aus Weintrauben zu verbessern, insbesondere zu beschleunigen.

Ausgehend von einem Verfahren zur Saftgewinnung aus Weintrauben mit den Merkmalen des Oberbegriffes des Anspruches 1 wird diese Aufgabe erfindungsgemäß durch dessen kennzeichnende Merkmale gelöst. Eine erfindungsgemäße Vorrichtung zur Durchführung des Verfahrens nach Anspruch 1 ergibt sich aus den kennzeichnenden Merkmalen des Anspruches 7.

Es gibt zwar schneller arbeitende Trenngeräte als die eingangs erwähnten Packpressen. Korbpressen oder Tankpressen, diese anderen Geräte, wie eine Bandpresse oder ein Dekanter haben jedoch erhebliche Probleme, die mit der bekannten Zerkleinerungsart anfallende Maische zu behandeln. So bilden die Schalen, die bei einer Zerkleinerung mit einer Flügelwalzenmühle praktisch im ganzen erhalten bleiben, bei der Pressung mit einem Bandpreßfilter eine zusätzliche Filterschicht, die den Saftablauf erheblich erschwert. Dadurch ist die Ausbeute bei der Entsaftung der Maische mit einer Bandpresse erheblich geringer als mit der herkömmlichen Entsaftungsart. Man könnte daran denken. den auf dem Band eines solchen Bandpreßfilters sich ansammelnden Maischekuchen nach einer bestimmten Preßzeit umzuschichten, um so neue Filtrationswege für den Saftablauf zu gewinnen. Das ist aber sowohl umständlich, als auch zeitraubend und führt zu höherer mechanischer Belastung der Maische, die sich in höherem Trübgehalt höherer enzymatischer und oxidativer Beeinflussung des Saftes auswirkt.

Erfindungsgemäß werden daher die Trauben mittels eines Schneidvorganges zerkleinert, so daß Zerkleinerungsprodukte erhalten werden, die die Filterwege eines Bandpreßfilters nicht mehr derart zusetzen bzw. den Betrieb eines Dekanters erschweren.

Durch dieses Zerschneiden werden zwar nicht nur die Schalen kleiner geschnitten, sondern auch die Stiele durchschnitten, so daß ein Austritt von Gerbstoffen möglich wird; die sich an den Schneidvorgang zeitlich eng anschließende Trennung der Maische in Saft und Trester geschieht allerdings so schnell, innerhalb weniger Minuten, während der die Maische in dem Trenngerät verbleibt, daß ein Übergang schädlicher Mengen von Gerbstoffen nicht stattfinden kann.

für die schneidende Zerkleinerung der Trauben wrid vorzugsweise eine Lochscheibenmühle verwendet. während als nachfolgendes, schnell arbeitendes Trenngerät eine Siebbandpresse bzw. ein Bandpreßfilter oder ein Dekanter eingesetzt werden kann. Im Falle der Verwendung einer Siebbandpresse bzw. eines Bandfilters kann es vor allem in Abhängigkeit von der Beschaffenheit der Trauben zweckmäßig oder nötig sein, eine Teilentsaftung vorzunehmen, bevor die so dann vorentsaftete Maische gepreßt wird. Der bei der Teilentsaftung anfallende Saft kann aus Gründen besonderer Qualität bzw. Trübarmut getrennt abgeführt und damit als Sonderprodukt gewonnen werden, so daß nur die nach der Teilentsaftung verbleibende Maische der Siebbandpresse oder dem Dekanter zugeführt werden.

Man hat sich also bei dem erfindungsgemäßen Vorgehen von der bisherigen Vorstellung getrennt, nämlich die Trauben nur so zu quetschen, daß die Hülle, die Stiele und die Kerne möglichst nicht beschädigt werden, weil sonst in dem nachfolgenden, sehr lange Zeit benötigenden Preßvorgang Gerbstoffe und dergleichen in den Saft hätten gelangen können. Nach der Vorstellung der Erfindung wird demgegenüber bewußt das Zerkleinern der Schale, der Stiele und auch von Kernen in Kauf genommen, dafür aber die Trennzeit derart kurz, vorzugsweise deutlich weniger als 10 Minuten, gestaltet, daß über die Schnittflächen der derart zerkleinerten Schalen, Stiele und Kerne schädliche Mengen an Gerbstoffen oder dergleichen nicht in den Saft übertreten können.

Von besonderem Vorteil ist die Zerkleinerung im Rahmen einer Lochscheibenmühle durch deren Schneidmesser, wobei die Kerne in der Regel ungeschnitten bleiben. Die Schnittflächen bleiben daher klein, was bei Verwendung einer Hammermühle beispielsweise insoweit nicht der Fall wäre, als diese die Kerne, Stiele und dergleichen zertrümmern würde. Aus diesen zertrümmerten Bestandteilen könnten schädliche Mengen an Gerbstoffen und dergleichen schneller in den Saft übertreten.

Eine erfindungsgemäße Vorrichtung besteht aus einer Mühle mit einem Schneidwerkzeug, deren Ausgang mit dem Eingang eines Schnelltrenngerätes verbunden ist. Vorzugsweise wird eine Lochscheibenmühle als Zerschneidgerät mit einem nachgeschalteten Bandpreßfilter oder einem nachgeschalteten Dekanter verwendet. Sowohl die Mühle als auch das jeweils nachfolgende Trenngerät arbeiten kontinuierlich. was für eine schnelle Arbeitsweise von Vorteil ist. Für den Fall einer Teilentsaftung vor dem eigentlichen Pressen im Bandpreßfilter wird diesem ein kontinuierlich und schnell arbeitendes Vorentsaftungsaggregat vorgeschaltet, beispielsweise ein Schneckenförderer mit Siebeinrichtung.

Die einzelnen Geräte können in sich geschlossene Einheiten sein, sie können aber auch eine Baueinheit aus Lochscheibenmühle und Bandpreßfilter - gegebenenfalls mit im Maischefluß vorgeordneten Vorentsaftungsaggregat - bzw. Lochscheibenmühle und Dekanter bilden, derart, daß ein einheitlich zu transportierendes Gerät entsteht. Zwischen dem Ausgang der Mühle und dem Eingang des Trenngerätes kann eine Pumpe vorgesehen sein. in anderer Ausführung kann aber auch die Maische unmittelbar vom Ausgang der Lochscheibenmühle in den Eingang des Bandpreßfilters bzw. Vorentsaftungsaggregates oder des Dekanters übergehen. Eine Pumpe kann grundsätzlich auch dem Eingang der Schneidmühle vorgeschaltet sein. also die Traubenzufuhr in die Mühle bewirken oder unterstützen sowie dem Weitertransport der Maische dienen.

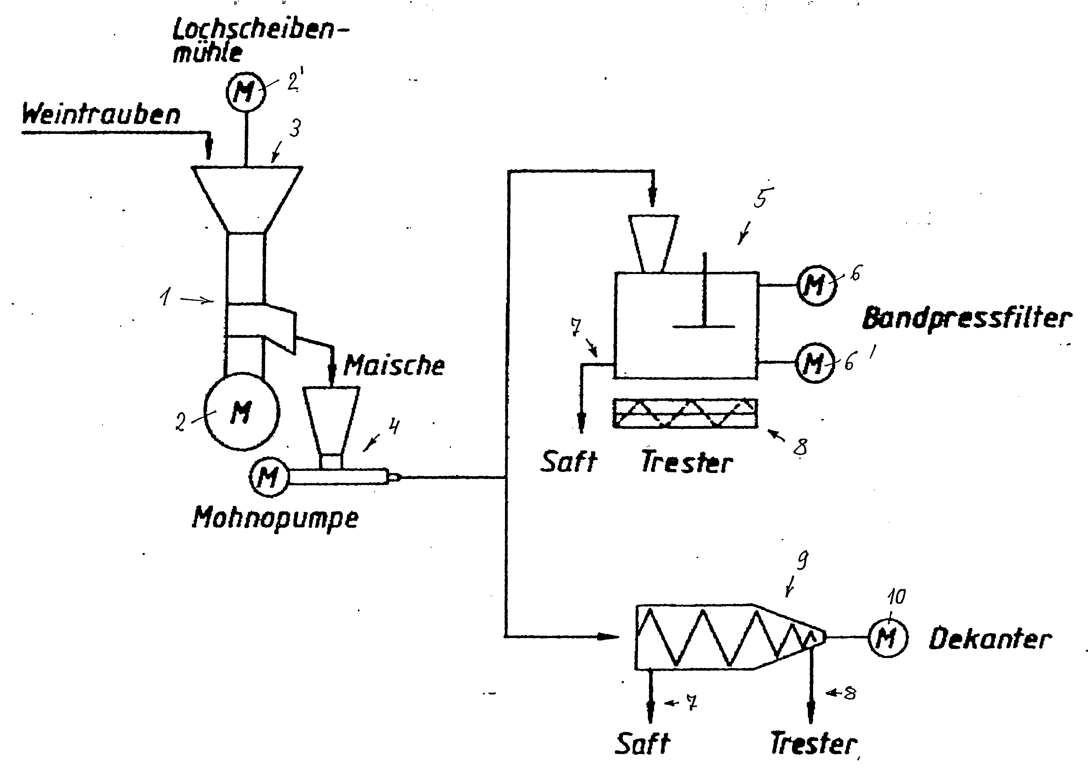

Die Erfindung wird anhand der in der Zeichnung wiedergegebenen Ausführungsbeispiele nachstehend näher geschildert.

Die Zeichnung zeigt eine Lochscheibenmühle 1, die ein Förderwerkzeug, beispielsweise eine Schnecke. und einen vierschneidigen Messerbalken aufweist. die einer stillstehenden Lochscheibe zugeordnet sind. Mit Hilfe der Elektromotoren 2 und 2' werden das Förderwerkzeug und der Messerbalken rotierend angetrieben. Nach Durchtritt durch die Lochscheibe gelangt die Maische in den Einlauftrichter einer Pumpeneinrichtung 4, die die Maische einem Trenngerät zuführt.

In der Zeichnung sind zwei mögliche Trenngeräte nebeneinander dargestellt, was so zu verstehen ist, daß eines dieser beiden Trenngeräte an den Ausgang der Pumpeneinrichtung 4 angeschlossen wird, also entweder das dargestellte Bandpreßfilter 5 oder der darunter dargestellte Dekanter 9. Im Rahmen des Bandpreßfilters 5 kann hinsichtlich des Flusses der zugeführten Maische ein nicht dargestelltes Vorentsaftungsgerät vorge

schaltet sein, wenn dies nach Art der behandelten Trauben angezeigt erscheint.

Das Bandpreßfilter ist mit Hilfe der Motoren 6 und 6' angetrieben und preßt die Maische durch das Filterband derart, daß bei 7 der zu gewinnende Saft austritt, während die andere Komponente des Trennvorganges, nämlich der Trester, bei 8 in eine Abfördereinrichtung überführt wird. Die Arbeitsweise eines solchen Bandpreßfilters bzw. einer Siebbandpresse oder dergleichen ist bekannt und bedarf hier keiner näheren Erläuterung.

Im Falle des Einsatzes eines Dekanters, dessen Arbeitsweise ebenfalls bekannt ist, gelangt die Maische durch einen Suspensions-Eingang in den zwischen der Innenwand der Trommel und der Förderschnecke gebildeten Trennraum, woraufhin durch Zentrifugalkraft die festen Bestandteile, die den Trester bilden, an die Trommelinnenwand gelangen und von dort mit Hilfe der Förderschnecke zu dem Tresterausgang 8 gefördert werden, während bei 7 der Abzug des Saftes angedeutet ist. Der Dekanter wird in bekannter Weise mittels eines Motors 10 in Differenzdrehzahl zwischen Trommel und Schnecke angetrieben.

## Ansprüche

1. Verfahren zur Saftgewinnung aus Weintrauben, bei welchem die Trauben mittels einer Mühle oder dergleichen zerkleinert werden und die so gewonnene Maische anschließend in Saft und Trester getrennt wird, **dadurch gekennzeichnet**, daß die Trauben mittels eines Schneidvorganges zerkleinert werden und daß die Maische in einem sich zeitlich eng anschließenden, kontinuierlich ablaufenden Trennvorgang einer Dauer nur weniger Minuten behandelt wird.

2. Verfahren nach Anspruch 1, **dadurch gekennzeichnet**, daß die schneidende Zerkleinerung der Trauben mit Hilfe einer Lochscheibenmühle durchgeführt wird.

3. Verfahren nach Anspruch 1 oder 2, **dadurch gekennzeichnet**, daß die Behandlungsdauer der Maische zwischen dem Ausgang des Schneidvorganges und dem Ende des Trennvorganges bis zu 10 Min. beträgt.

4. Verfahren nach einem der Ansprüche 1 bis 3, **dadurch gekennzeichnet**, daß die Maische mit Hilfe einer Siebandpresse (Bandpreßfilter) in Saft und Trester getrennt wird.

5. Verfahren nach einem der Ansprüche 1 bis 3, **dadurch gekennzeichnet**, daß die Maische mit Hilfe eines Dekanters in Saft und Trester getrennt wird.

6. Verfahren nach Anspruch 4 oder 5,

**dadurch gekennzeichnet,** daß die Maische vor Einleitung in die Siebbandpresse bzw. in den Dekanter teilentsaftet wird.

7. Verfahren nach Anspruch 6,

**dadurch gekennzeichnet,** daß der bei der Teilentsaftung abgetrennte Saft gesondert abgeführt und gesammelt wird und nur die nach der Teilentsaftung verbleibende Maische der Siebbandpresse bzw. dem Dekanter zugeführt wird.

8. Vorrichtung zur Durchführung des Verfahrens nach Anspruch 1, **dadurch gekennzeichnet,** daß die Mühle (1) ein Schneidwerkzeug aufweist und daß der Maische-Ausgang der Mühle (1) dem Eingang eines Schnelltrenngerätes (5; 9) zugeführt ist.

9. Vorrichtung nach Anspruch 8,

**dadurch gekennzeichnet,** daß das Schnelltrenngerät als Siebbandpresse -Bandpreßfilter - (5) ausgebildet ist.

10. Vorrichtung nach Anspruch 8,

**dadurch gekennzeichnet,** daß das Schnelltrenngerät als Siebbandpresse - Bandpreßfilter - (5) mit vorgeschaltetem, kontinuierlich durchlaufend arbeitendem Vorentsaftungsaggregat ausgebildet ist.

11. Vorrichtung nach Anspruch 10,

**dadurch gekennzeichnet,** daß die Siebbandpresse - Bandpreßfilter - (5) und das Vorentsaftungsaggregat als bauliche Geräteeinheit ausgebildet sind.

12. Vorrichtung nach Anspruch 8,

**dadurch gekennzeichnet,** daß das Schnelltrenngerät als Dekanter (9) ausgebildet ist.

13. Vorrichtung nach Anspruch 12,

**dadurch gekennzeichnet,** daß das Schnelltrenngerät als Dekanter (9) mit vorgeschaltetem, kontinuierlich durchlaufend arbeitendem Vorentsaftungsaggregat ausgebildet ist.

14. Vorrichtung nach Anspruch 13,

**dadurch gekennzeichnet,** daß der Dekanter (9) und das Vorentsaftungsaggregat als bauliche Geräteeinheit ausgebildet sind.

15. Vorrichtung nach einem der Ansprüche 8 bis 14,

**dadurch gekennzeichnet,** daß die Mühle (1) und das Schnelltrenngerät (5; 9) als bauliche Maschineneinheit ausgebildet sind.

16. Vorrichtung nach einem der Ansprüche 8 bis 15,

**dadurch gekennzeichnet,** daß zwischen dem Ausgang der Mühle (1) und dem Eingang des Schnelltrenngerätes (5; 9) eine Pumpeneinrichtung (4) eingeschaltet ist.

17. Vorrichtung nach einem der Ansprüche 8 bis 15,

**dadurch gekennzeichnet,** daß dem Eingang der Mühle (1) eine Pumpeneinrichtung vorgeschaltet ist.

18. Vorrichtung nach einem der Ansprüche 8 bis 15 und 17,

**dadurch gekennzeichnet,** daß der Ausgang der Mühle (1) unmittelbar mit dem Eingang des Trenngerätes (5; 9) verbunden ist.

19. Vorrichtung nach einem der Ansprüche 8 bis 18,

**dadurch gekennzeichnet,** daß die Mühle als Lochscheibenmühle (1) ausgebildet ist.

20. Vorrichtung nach einem der Ansprüche 8 bis 19,

**dadurch gekennzeichnet,** daß das Vorentsaftungsaggregat eine von einem Sieb umgebene Förderschnecke aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 296 012 (C. CANTARELLI) <br> * Ansprüche 1-3,7; Seite 4, Zeile 27 - Seite 5, Zeile 17 * <br> --- | 1-20 | A 23 N 1/02 |
| Y | US-A-1 780 067 (C.S. COX) <br> * Figuren; Ansprüche; Seite 1, Zeilen 4-15; Seite 1, Zeile 93 - Seite 2, Zeile 7 * <br> --- | 1-20 | |
| A | DE-A-1 777 323 (MASCHINENFABRIK BUCKAU R. WOLF AG) <br> * Figuren; Ansprüche * <br> --- | 1,2,8, 19 | |
| A | US-A-1 373 398 (L.A. BABCOCK) <br> * Figuren; Ansprüche; Seite 2, Zeile 59 - Seite 2, Zeile 3 * <br> --- | 1,2,8, 19 | |
| A | US-A-1 458 315 (L.A. BABCOCK) <br> * Figuren; Ansprüche; Seite 2, Zeilen 41-48 * <br> --- | 1,2,8, 19 | |
| A | FR-A-2 147 449 (ETS. G. PEPIN FILS AINE ET SOCIETE DU FILTRE GASQUET et al.) <br> * Figuren; Ansprüche; Seite 1, Zeile 2 * <br> --- | 1,8,10, 14,20 | RECHERCHIERTE SACHGEBIETE (Int. Cl.4) <br><br> C 12 G <br> A 23 N |
| A | US-A-3 116 682 (J. MacKENZIE) <br> * Figuren 3-5; Ansprüche; Seite 1, Spalte 1, Zeile 11 * <br> ----- | 1,2,8, 19 | |

Der vorliegende Recherchenbericht wurde für alle Patentansprüche erstellt

| Recherchenort | Abschlußdatum der Recherche | Prüfer |
|---|---|---|
| DEN HAAG | 14-04-1989 | COUCKE A.O.M. |